# EUROPEAN PATENT SPECIFICATION

(11) **EP 4 419 812 B1**
(45) Date of publication and mention of the grant of the patent: **04.03.2026**
(21) Application number: 22797884.8
(22) Date of filing: 20.10.2022
(51) Int. Cl.: F16F 15/123, F16F 15/12

(54) **IMPROVED FILTERING PULLEY FOR A HEAVY VEHICLE**
VERBESSERTE FILTERRIEMENSCHEIBE FÜR EIN SCHWERFAHRZEUG
POULIE DE FILTRAGE AMÉLIORÉE POUR VÉHICULE LOURD

(30) Priority: 22.10.2021 CN 202111235220; 22.10.2021 IT 202100027143
(43) Date of publication of application: 28.08.2024
(60) Divisional application: 25192766.1
(73) Proprietor: Muviq S.r.l., 10015 Ivrea (TO) (IT)
(72) Inventor: CARICCIA, Gianluca, 10015 IVREA (TO) (IT); GUALA, Andrea, 10015 IVREA (TO) (IT); SPINELLI, Jacopo, 10015 IVREA (TO) (IT); AMADIO, Stefano, 10015 IVREA (TO) (IT)
(74) Representative: Studio Torta S.p.A.
(86) International application number: PCT/IB2022/060092
(87) International publication number: WO 2023/067542

(56) References cited:
- EP-A1- 1 396 662
- EP-A1- 2 273 144
- EP-A1- 3 271 616
- EP-A1- 3 631 227
- EP-B1- 3 271 616
- EP-B1- 3 631 227
- CN-U- 211 924 843
- DE-A1- 102019 109 454
- DE-A1- 102019 116 436
- DE-A1- 102019 128 597
- US-A1- 2017 059 028
- US-A1- 2020 208 728

## Description

### Technical Field

The invention relates to a filtering pulley, preferably a pulley for a crankshaft for an accessory drive system of an internal combustion engine for a heavy vehicle.

### Known State of the Art

As it is known, the drive shaft of internal combustion engines is subjected to torsional vibrations due to the periodic stresses caused by the combustion taking place in the cylinders. Said vibrations are particularly strong when the engine is started and at low speeds as well as in the presence of particular constructive solutions, such as for example the use of dual-clutch transmissions or start-stop systems.

Torsional vibrations translate into irregularities in the rotation of the drive pulley of the accessory drive system, which are transmitted to the accessories through the transmission belt, which, therefore, is subjected to periodic tension vibrations.

In order to "filter" the torsional vibrations transmitted by the crankshaft to the belt, a filtering pulley is generally used as drive pulley, said filtering pulley being provided with a hub integral to the drive shaft, a crown cooperating with the belt and one or more elastic elements, through which a torque is transmitted by the hub to the crown. In heavy vehicles, this need is even stronger, given the large operating loads.

Furthermore, heavy vehicles have different configurations, which require filtering pulleys with different dimensions and functionalities depending on the type of vehicle.

This request clearly leads to an increase in the manufacturing costs of pulleys of different types.

Example of known pulleys in prior art are shown in publications DE102019109454 A1, EP3631227 A1, EP3271616 A1, DE102019128597 A1, CN211924483 U, US2017/059028 A1, EP1396662 A1, US2020/208728 A1M DE102019116436 A1 or EP2273144 A1.

The object of the invention is to provide a filtering pulley capable of solving the technical problems discussed above in a simple and economic fashion.

### Summary of the Invention

The aforesaid object is reached by a filtering pulley according to the appended claims.

### Brief Description of the Drawings

The invention will be best understood upon perusal of the following detailed description of a preferred embodiment, which is provided by way of nonlimiting example, with reference to the accompanying drawings, wherein:

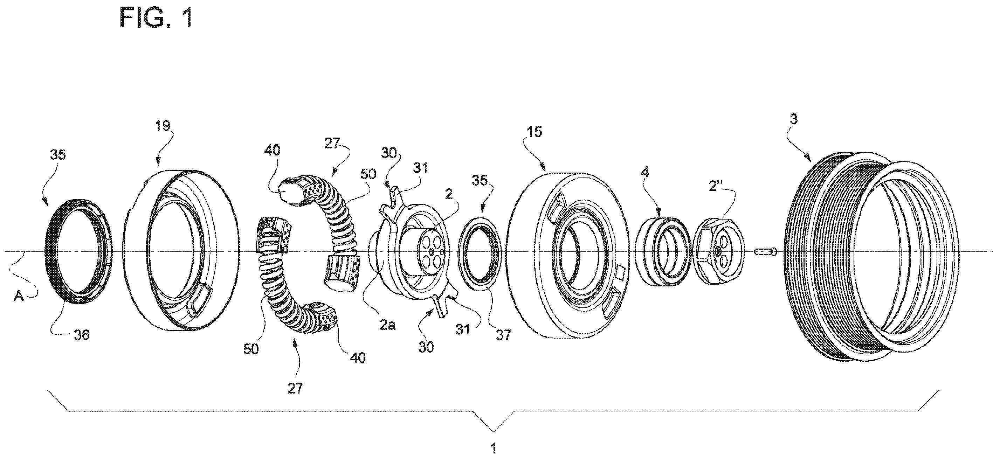

- Figure 1 is an exploded perspective view of a first embodiment of a filtering pulley according to the invention;
- Figure 2 is a longitudinal section view of the pulley of figure 1;
- Figure 3 is a cross section view according to line III-III of the pulley of figure 1;
- Figure 4 is a longitudinal section view of a second embodiment of a filtering pulley according to the invention;
- Figure 5 is a cross section view according to line V-V of the pulley of figure 4;
- Figure 6 is a longitudinal section view of a third embodiment of a filtering pulley according to the invention;
- Figure 7 is a cross section view according to line VII-VII of the pulley of figure 4;
- Figure 8 is a longitudinal section view of a fourth embodiment of a filtering pulley according to the invention;
- Figure 9 is a cross section view according to line IX-IX of the pulley of figure 8;
- Figure 10 is a longitudinal section view of a fifth embodiment of a filtering pulley according to the invention;
- Figure 11 is a cross section view according to line XI-XI of the pulley of figure 10;
- Figure 12 is a longitudinal section view of a sixth embodiment of a filtering pulley according to the invention;
- Figure 13 is a cross section view according to line XIII-XIII of the pulley of figure 12;
- Figure 14 is a longitudinal section view of a seventh embodiment of a filtering pulley according to the invention;
- Figure 15 is a cross section view according to line XV-XV of the pulley of figure 14;
- Figure 16 is a longitudinal section view of an eighth embodiment of a filtering pulley according to the invention;
- Figure 17 is a cross section view according to line XVII-XVII of the pulley of figure 16.

### Detailed Description of the Invention

The accompanying figures show a filtering pulley 1 comprising a hub 2 with axis A, which is designed to be connected to a shaft (which is not shown herein), for example a crankshaft of an internal combustion engine, and an annular crown 3, which is externally coaxial to the hub 2 and is supported by the hub 2 through support means 4 so that it can freely rotate.

In particular, the crown 3 comprises an annular portion 5 defining a radial inner surface 5a and an outer surface 5b defining at least one profile 6, which is designed to cooperate with a mechanical transmission element, such as for example a poly-V belt (which is not shown herein).

The hub 2 comprises a tubular portion 2a, which is axially interposed between a first connection portion 2' and a second connection portion 2''. The first and the second connection portions 2', 2'' are configured to allow the drive shaft (which is not shown) to be connected to the hub 2.

The pulley 1 further comprises a filtering assembly 8, which is operatively interposed, in a radial direction, between the crown 3 and the hub 2, advantageously between the tubular portion 2a and the surface 5a.

In particular, according to the invention, the filtering assembly 8 comprises a housing 9, which is integral to the crown 3, cooperates in contact with the surface 5a and defines a space 11, filtering means 12, which are housed inside the space 11 in a movable manner, and actuator means 13, which are manufactured as one single, i.e. monolithich, piece together with the hub 2, in particular with the tubular portion 2a, and are configured to cooperate in contact with the filtering means 12 inside the space 11 in order to selectively transmit torque between the hub 2 and the crown 3.

The housing 9 comprises a cup-shaped element 15 comprising an annular outer wall 16 and an annular inner wall 17, which are connected to one another by a radial wall 18. Advantageously, said walls of the cup-shaped element 15 are manufactured as one single piece.

The housing 9 comprises a closing element 19, which faces the cup-shaped element 15 and comprises an annular outer wall 21, an annular inner wall 20 and a radial wall 22, which connects the two annular walls. Advantageously, said walls of the closing element 19 are manufactured as one single piece.

In particular, the annular outer wall 16 of the cup-shaped element 15 is housed so as to cooperate in contact with the radial inner surface 5a of the crown 3 and the annular outer wall 21 of the closing element 19 is housed so as to cooperate in contact with the annular outer wall 16 of the cup-shaped element 15 on the opposite side relative to the radial inner wall 5a.

On the opposite side, the annular inner wall 18 is housed so as to cooperate in contact with the support means 4, whereas the radial wall 22 of the closing element 19 radially extends in a limited manner relative to the annular inner wall 18 of the cup-shaped element 15, thus opening a passage 23 allowing access to the space 11.

In particular, the passage 23 is radially delimited by the radial inner wall 20 of the closing element 19 and by the radial inner wall 18 of the cup-shaped element 15 and is obviously open in an axial direction.

In particular, the support means 4 comprise rolling bearings, especially a pair of ball bearings radially interposed between the wall 18 of the cup-shaped element 15 and the tubular portion 2a of the hub 2 and axially interposed between a terminal turn-up 24 of the wall 18 and one of the connection portions 2', 2''.

The closing element 19 and/or the cup-shaped element 15 finally comprise two diametrically opposite projections 25, which axially extend into the space 11 starting from the wall 17 and 19. The projections 25 divide the space 1 into two portions 11a, 11b, which are circumferentially delimited by the projections 25 and radially delimited by the walls 17, 19.

The projections 25 are carried by the respective walls in a fixed manner or, alternatively, are manufactured as one single piece together with them.

As shown, the filtering means 12 comprise at least one elastic assembly 27, which is arranged in a circumferentially free manner in the respective portions 9a, 9b of the space.

The actuator means 13 advantageously comprise a disc actuator 30 comprising two spokes 31, which are free to circumferentially move in the space 11 and are designed to interact with the filtering means 12.

In particular, each spoke 31 comprises a radial inner portion 31a radially extending from the tubular portion 2a of the hub 2, an annular portion 31b axially extending from the radial end of the radial inner portion 31a opposite the hub 2 and a radial outer portion 31b configured to cooperate with the filtering means 12.

Consequently, the radial inner portion 31a is housed inside the space 11, whereas the annular portion 31b is sized so as to go through the space 23 without coming into contact with the housing 9.

In particular, the spokes 31 are positioned so as to be centred relative to the support means 4; in other words, the middle line of their section coincides with a symmetry axis of the support means. Hence, in case of a pair of rolling bearings, the middle line of the spokes lies between the two rolling bearings.

Preferably, the stroke of the elastic assemblies 27 in the respective portions 11a, 11b can result from an angular clearance α present between each one of the elastic assemblies 27 in contact with either one of the projections 25.

Similarly, the spokes 31 can be spaced apart from the elastic assemblies 27 by an angular clearance β, which adds to the angular clearance α during the operation of the pulley 1 as described below.

The pulley 1 furthers comprises sealing means 35, which are configured to be operatively interposed between the actuator means 13, the hub 2 and the housing 9 so as to prevent foreign elements from reaching the space 11 and the support means 4.

In particular, said sealing means 35 comprise a gasket 36 for rotary elements, such as a labyrinth seal fixed to the structure 9 and sliding on the actuator disc 30. In particular, the gasket 36 is radially interposed between the radial wall 22 of the closing element 19 and the annular portion 31b.

Preferably, the sealing means 35 further comprise a gasket 37 for rotary elements, which is axially interposed between the radial inner portion 31a and the terminal turn-up 24 of the cup-shaped element 15, and axial thrust means 38, which are axially interposed between the gasket 37 and the radial inner wall 31a. In particular, said axial thrust means 38 comprise a Belleville washer, which is configured to exert a compression force directed towards the gasket 37.

The pulley 1 can further comprise at least one pair of end sliding blocks 40, each comprising an arched portion 41, which internally surrounds an end portion of the elastic assemblies 27, and a head 42 defining an axial support for said end portion.

The pulley 1 can further be provided with a dynamic damper (which is not shown herein) carried either by the first connection portion 2' or by the second connection portion 2".

Now reference will be made to the embodiments shown in the accompanying drawings, pointing out the differences of each one of them relative to the common description discussed above.

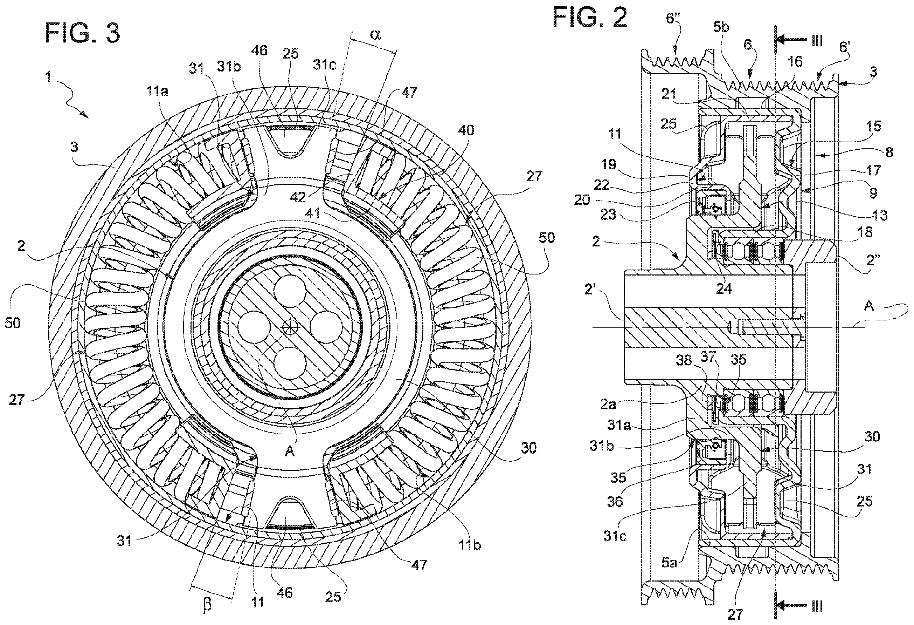

In the embodiment of figures 2 and 3 there are both the angular clearance α and the angular clearance β and both spokes have an axial opening 46 made in a radially terminal portion. Both spokes 31 also comprise an impact element 47, for example an element made of a polymer and rigidly carried by the radial outer portion 31c of the spoke 31 so as not to directly hit the elastic assembly 27. In the case described herein, the impact element 47 hits the head 42 of the sliding block 40.

The elastic assemblies 27 each comprise an arched helical spring 50 having a fixed pitch along its circumferential extension.

The second connection portion 2'' is advantageously manufactured as a separable element, which can be fixed to the tubular portion 2a of the hub 2 and can help a dynamic damper as well as act as axial thrust-bearer of the support means 4. The first connection portion 2', on the other hand, is manufactured as one single piece together with the tubular portion 2.

The crown 3 defines, in particular, a pair of poly-V profiles 6, in particular a first profile 6' and a second profile 6'', which are radially staggered relative to one another so that the first profile 6' is radially closer to the axis A than the first one. In the embodiment shown herein, the first and the second profiles 6', 6'' are both obtained on respective cylindrical walls with a different radius and the first profile 6' axially extend to a greater extent than the second profile 6''.

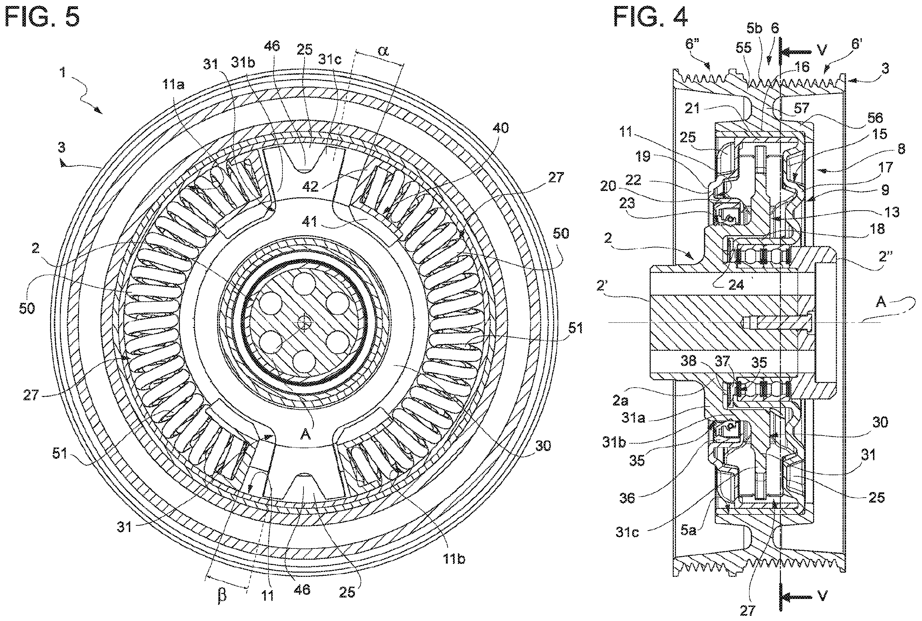

In the embodiment of figures 3 and 4 there are both the angular clearance α and the angular clearance β and both spokes have an axial opening 46 made in a radially terminal portion.

The elastic assemblies 27 each comprise a first arched helical spring 50, which has a fixed pitch along its circumferential extension, and a second arched helical spring 51, which has a fixed pitch and is radially housed within the first spring 50. In this way, the elastic assembly 27 has a stiffness that is equal to the sum, in parallel, of the first and of the second spring 50, 51.

The second connection portion 2'' is advantageously manufactured as a separable element, which can be fixed to the tubular portion 2a of the hub 2 and can help a dynamic damper as well as act as axial thrust-bearer of the support means 4. The first connection portion 2', on the other hand, is manufactured as one single piece together with the tubular portion 2.

The crown 3 defines, in particular, a pair of poly-V profiles 6, in particular a first profile 6' and a second profile 6'', which are radially staggered relative to one another so that the first profile 6' is radially closer to the axis A than the first one. In the embodiment shown herein, the first and the second profiles 6', 6'' are both obtained on respective cylindrical walls with a different radius and the first profile 6' axially extend to a greater extent than the second profile 6''. In particular, the crown 3 has a "H"-shaped section so that the aforesaid profiles 6 are obtained on a radial outer surface 5b of an annular outer portion 55 of the crown 3 connected to an annular inner portion 56, coaxial to the previous one, defining the radial inner surface 5a cooperating with the filtering assembly 8.

The annular outer and inner portions 55, 56 are connected to one another by means of a radial bridge 57, preferably arranged so as to substantially coincide with the symmetry axis of the spokes 31.

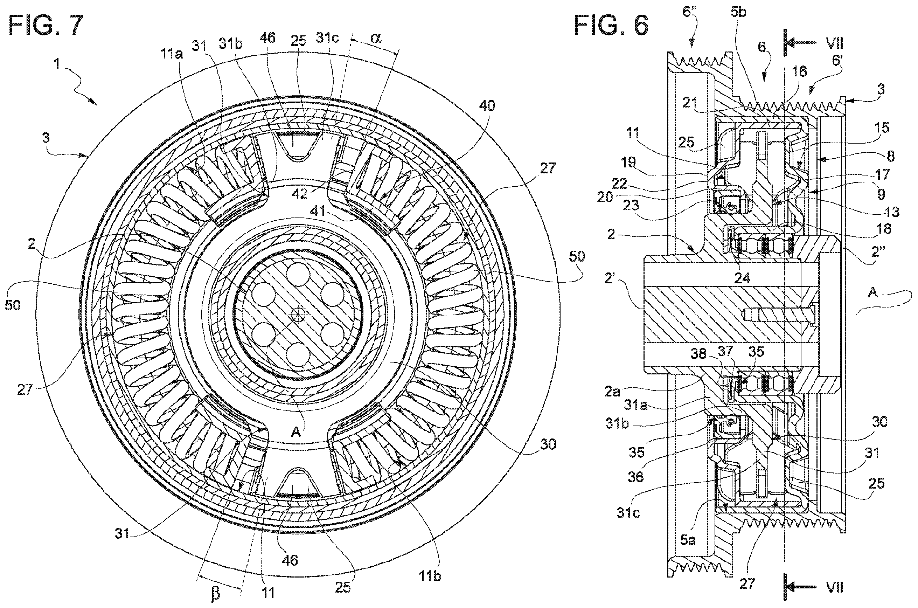

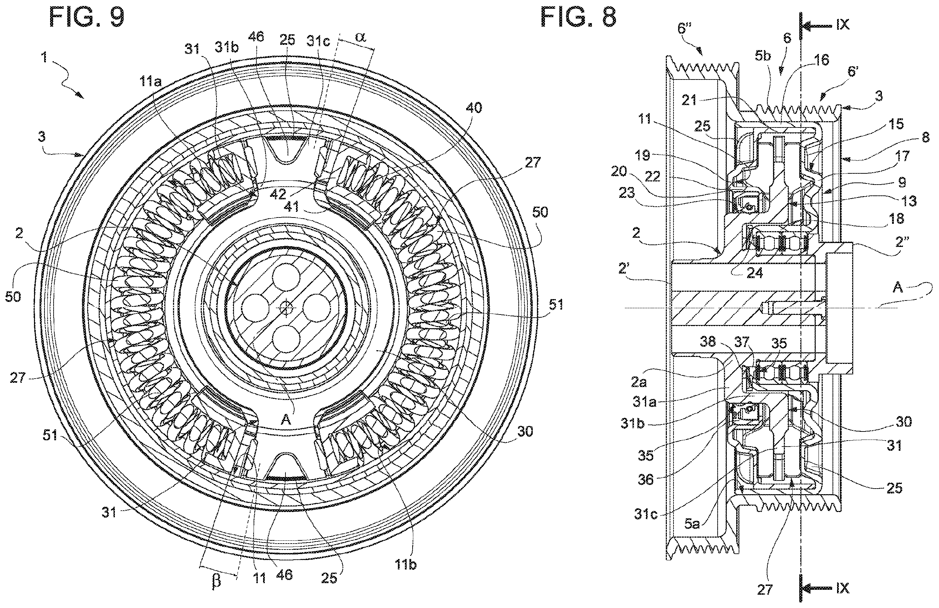

The embodiment of figures 6 and 7 is substantially similar to the embodiment of figures 2 and 3, but the second profile 6'' is radially more on the outside and has a smaller axial extension compared to the embodiment of figures 2, 3. The embodiment of figures 8 and 9 is substantially similar to the embodiment of figures 2 and 3, but the second profile 6" is radially more on the outside and has a smaller axial extension compared to the embodiment of figures 2, 3. Furthermore, the elastic assemblies 27 comprise a first and second spring 50, 51, like the embodiment of figures 4 and 5.

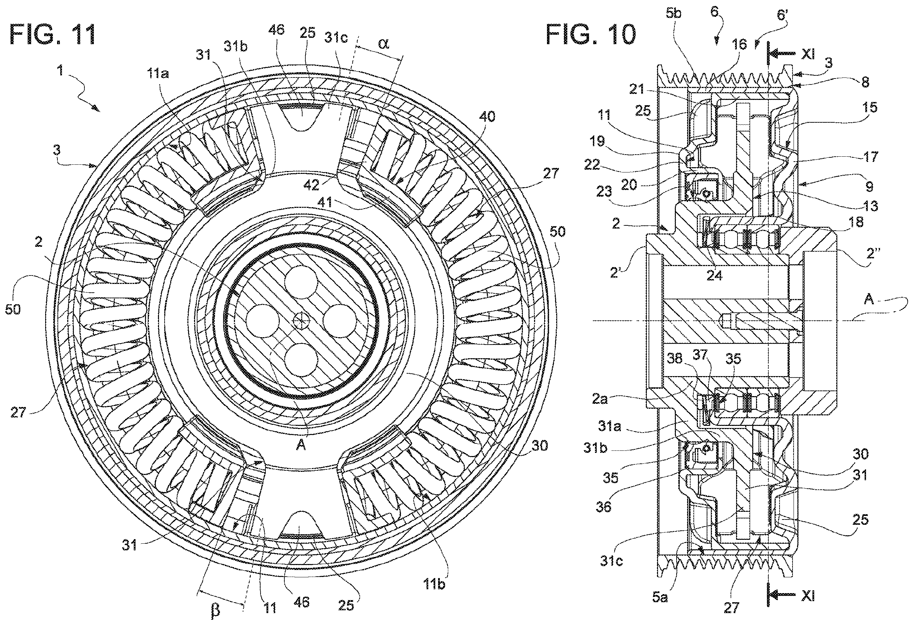

In the embodiment of figures 10 and 11, compared to the embodiment of figures 3 and 4, the difference lies in the crown 3, which defines one single profile 6 on the surface 5b. Indeed, the crown 3, in this case, is defined by one single annular element defining the radial inner surface 5a, on one side, and the radial outer surface 5b defining the only ply-V profile, on the other side.

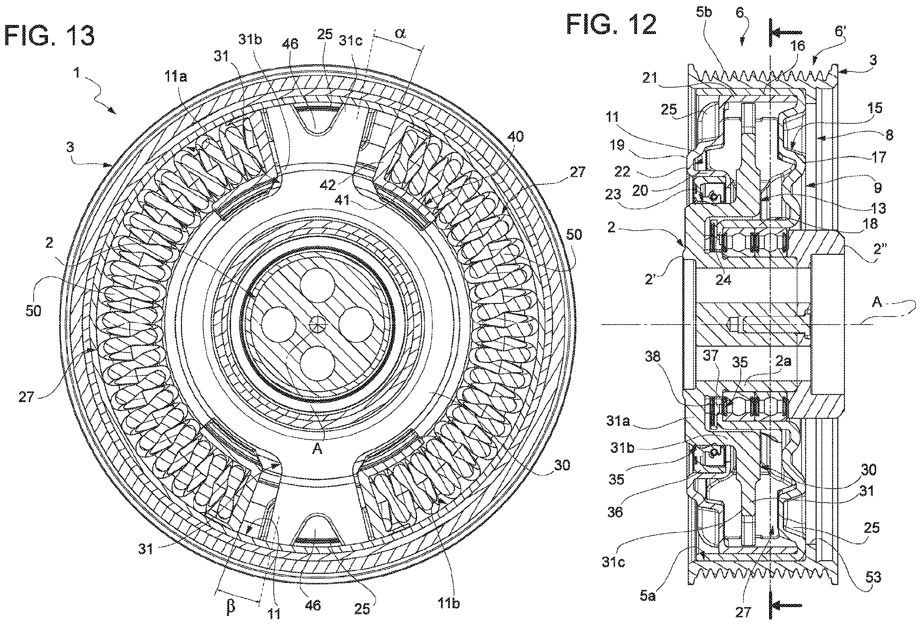

In the embodiment of figures 12 and 13, compared to the embodiment of figures 10 and 11, there is a radial inner projection 53 radially extending from the inside of the radial inner surface 5a so as to cooperate in contact with the cup-shaped element 15 in order to limit a possible axial movement thereof.

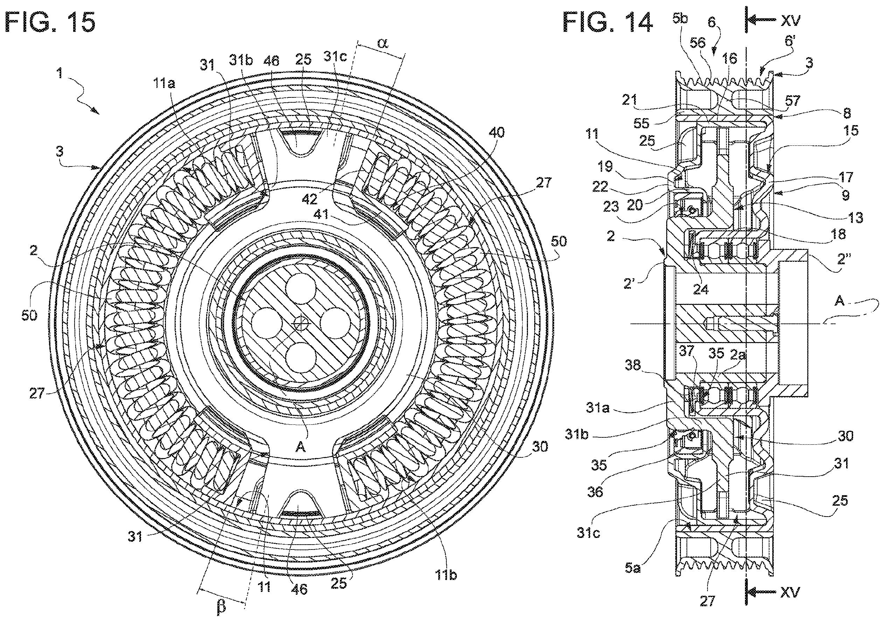

In the embodiment of figures 14 and 15, compared to the embodiment of figures 10 and 11, the crown 3 comprises an element having a "H"-shaped section, in which the radial inner portion 55 defines the radial inner surface 5a, whereas the radial pouter portion 56 defines the radial outer surface 5b defining the only poly-V profile. The two portions 55, 56 are joined to one another by a radial bridge 57, which is advantageously arranged so as to coincide with the middle axis of the spokes 31 and of the support means 4.

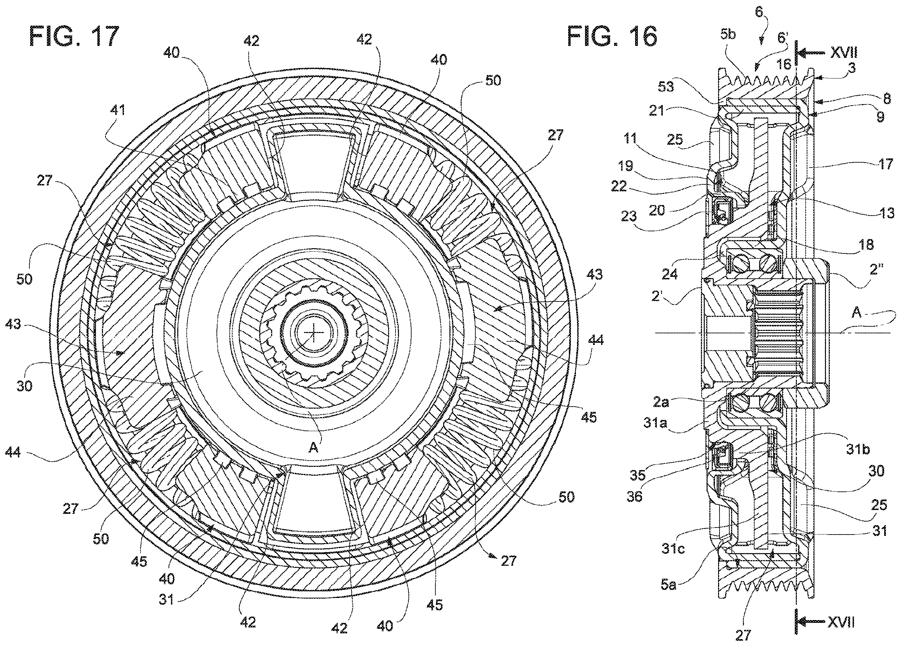

In the embodiment of figures 16 and 17 there are neither the angular clearance α nor the angular clearance β (or, better said, in the case shown herein they have values in a smaller order of magnitude compared to the embodiments described above). Both spokes 31 have a solid section, without openings of the type described for the previous embodiments.

The elastic assemblies 27 each comprise an arched helical spring 50 having a fixed pitch along its circumferential extension.

The second connection portion 2" and the first connection portion 2' are both advantageously manufactured as separable elements, which can be fixed to the tubular portion 2a of the hub 2. In particular, the second connection portion 2' can help a dynamic damper as well as act as thrust-bearer of the support means 4.

The crown 3 defines, like in the embodiment of figures 12 and 13, one single poly-V profile 6 and a radial inner projection 53 cooperating with the filtering assembly 8.

The pulley further comprises, in addition to the sliding blocks 40, which it shares with the other embodiments, an intermediate sliding block 43, which comprises a pair of lateral walls 4 and is circumferentially open. According to figure 17, the sliding blocks 40 and the intermediate sliding block 43 define a plurality of grooves 45, in the case shown herein axially extending grooves, which are configured to help oil flow in the portions 11a, 11b.

The operation of the pulley 1 is described below with reference to the first embodiment (figures 3 and 4), the operation of the other embodiments being similar to or simplified relative to the first embodiment.

To this purpose, since in said embodiment two different belt systems can be connected by means of the two profiles 6', 6" , the torque acting upon the crown 3 clearly is the sum of the two.

In a first operating step, called "driving mode" and constituting the normal operation of the pulley 1, when the drive shaft drives the accessories, the speed of the hub 2 tends to exceed the speed of the crown 3. For this reason, the spokes 31 transmit the torque to the projections 25 with the interposition of the respective elastic assemblies 27.

This also happens, in a symmetrical manner, in the "overrunning" condition, namely when the speed of the crown 3 tends to exceed the speed of the hub 2.

In both operating conditions, the sealing means 35 provide a damping for the free rotation ensured by the support means 4 between the hub 2 and the crown 3.

Said damping is also provided by the flow of the oil contained in the space 11, which flows through the elastic assemblies 27, in particular between said at least one helical spring 50 and the sliding blocks 40, 43.

If the free angles α, β are present, there is a free rotation angle between the hub 2 and the crown 3, so that no torque is transmitted despite the relative rotation between these two elements. Said free rotation angle is the result of the sum of the free angles α, β.

Indeed, the spoke 31, at first, starts rotating in an idle manner until the elastic assemblies 27 meet the respective projection 25, so that they start compressing, thus transmitting torque.

Therefore, the advantages of a pulley 1 according to the invention are evident.

Thanks to the actuator means 13 manufactured as one single piece together with the hub 2, large loads can be transmitted without damaging risks.

Through the use of a filtering assembly 8 of the type described above it is possible to change the shape of the hub, in particular of its portions connecting it to the drive shaft and to the dynamic damper, and of the diameter of the crown without having to replace the filtering assembly.

Indeed, as shown in the different sections of figure 2 and following even numbers, the filtering assembly has the same size and is replaceable in the different embodiments shown, despite the change in the shapes and diameters of the crown and of the connection portions of the hub 2.

Furthermore, the filtering assembly can contain different elastic means, such as one single spring, several springs in series or in parallel or with a variable thread in order to allow for a variable filtering depending on design needs.

In addition, the use of spring carrying elements allows the movement of the elastic means inside the respective seats to be guided.

The use of spring carrying elements provided with grooves allows the stroke thereof to be used to generate damping, forcing the passage of oil in said grooves.

Furthermore, between spokes and/or projections and elastic assemblies there can be angular clearances with a variable width, which are configured to provide a dead angle between hub and crown, which has a width that varies depending on different filtering needs.

The presence of a pair of rolling bearings as support means allows the pulley to bear large radial loads. Indeed, the fact that the spoke is placed in the middle of the support means and, advantageously, of the poly-V section allows tilting loads to be reduced, thus increasing the useful life of the support means.

Finally, the pulley described above can be subjected to changes or variants, which do not go beyond the scope of protection set forth in the appended claims.

First of all, the pulley does not necessarily have to be used on the crankshaft of an internal combustion engine, but could be used for one of the accessories thereof.

With reference to the elastic assemblies 27, they could be manufactured differently, though without changing their function. For example, they could comprise springs of a different nature or several springs, in series or in parallel. In addition, there could be four elastic assemblies as well as four spokes of the actuator.

A dynamic damper could be absent and the actuator could be carried by the hub 2 in a different manner. Similarly, the support means 4 could be replaced by a bushing.

Moreover, the angular values α, β could be absent or have a different width depending on the type of dynamic torsional behaviour of the drive shaft in the specific application.

Furthermore, there could be one or more damping device in addition to what described above.

Clearly, the shape of the crown 3 and of the connection portions 2', 2'' can be different depending on design needs.

## Claims

1. A filtering pulley (1) comprising a hub (2), which is designed to be fixed to a rotary shaft rotating around an axis (A), and a crown (3), which is coaxial to said hub (2),
said hub (2) defining a tubular portion (2a) and at least one connection portion (2', 2"), which is configured to connect said hub (2) to said rotary shaft,
said crown (3) defining a radial outer surface (5b) defining at least one profile (6), which is configured to cooperate with a mechanical transmission element, and a radial inner surface (5a), which is radially arranged on the inside relative to the said radial outer surface (5b),
said filtering pulley (1) comprising a filtering assembly (8) operatively interposed between said hub (2) and said crown (3), said filtering assembly (8) comprises a housing (9) integral to said crown (3) and defining a space (11), said housing (9) being carried in a rotatably free manner by said hub (2) via means of support means (4),
said filtering assembly (8) further comprising elastic means (12), which are housed inside said space (11) in a movable manner, and actuator means (13), which are configured to cooperate in contact with said elastic means (12),
said actuator means (13) being manufactured as one single piece together with said tubular portion (2a) of said hub (2) and said housing (9) cooperating in contact with said radial inner surface (5a) of said crown (3),wherein said housing (9) comprises a cup-shaped element (15), which is configured to cooperate with said radial inner surface (5a), and a closing element (19), which is configured to cooperate in contact with said cup-shaped element (15) in order to define said space (11), and
**characterized in that** said cup-shaped element (15) and said closing element (19) are shaped so as to define an axial opening (23), through which said actuator means (13) are partially housed inside said space (11).

2. The filtering pulley according to claim 1, wherein at least one of said cup-shaped element (15) and said closing element (19) defines a pair of axial projections (25), said projections (15) dividing said space (11) into two portions (11a, 11b) where said elastic means (12) can move due to the action of said actuator means (13).

3. The filtering pulley according to claim 1 or 2 , wherein said closing element (19) is radially comprised inside said cup-shaped element (15)I.

4. The filtering pulley according to one of the claims from 1 to 4, wherein said elastic means (12) comprise an elastic assembly (27), said elastic assembly comprising at least one helical spring (50).

5. The filtering pulley according to claim 4, wherein said elastic assembly (27) comprises a first and a second helical springs (50, 51).

6. The filtering pulley according to claim 4 or 5, wherein said elastic assembly (27) comprises at least one spring carrying element (40), which is configured to at least partly house an axial portion of said at least one spring (50) and guide the sliding of said at least one spring (50) in said space.

7. The filtering pulley according to claim 6, wherein said elastic assembly (27) comprises a pair of spring carrying elements (40) , which are arranged at respective ends of said at least one spring (50) and are provided with a pair of lateral walls (41), which are configured to surround an axial portion of said at least one spring (50), and with a head (42), which is connected to said lateral wall (41), said head (42) cooperating in contact with said actuator means (13).

8. The filtering pulley according to claim 6 or 7, wherein said elastic assembly (27) comprises an intermediate spring carrier (43), which is intermediate between the ends of said at least one spring (50), said spring carrier (43) comprising a pair of lateral walls (44), which are configured to surround an axial portion of said at least one spring (50).

9. The filtering pulley according to any of claims 4 to 8, wherein said actuator means (13) comprise a disc (30) provided with a plurality of spokes (31), said spokes comprising a radial inner portion (31a) on the outside relative to said space (11), a radial inner portion (31c), which is internally housed in said space (11) and cooperates in contact with said elastic assembly (27), and an axial portion (31b), which joins said radial inner and outer portions (31a, 31c).

10. The filtering pulley according to claim 9, wherein each spoke (31) defines a through opening (46) arranged at a radial end of each spoke (31).

11. The filtering pulley according to claim 9 or 10, wherein each spoke (31) comprises impact elements (47), which are configured to cooperate in contact with said elastic assembly (27), said impact elements (47) being made of a polymer material and being integral to said spoke (31).

12. The filtering pulley according to one of the claims from 6 to 10, when they depend on claim 4, wherein between said projections (25) and said elastic assembly (27) there is an angular clearance (α).

13. The filtering pulley according to one of the claims from 11 to 13, when they depend on claim 4, wherein between each spoke (31) and said elastic assembly (27) there is an angular clearance (β).

14. The filtering pulley according to one of the preceding claims, wherein at least one of said connection portions (2', 2") of said hub (2) is manufactured as one single piece together with said tubular portion (2a).

15. The filtering pulley according to one of the claims from 1 to 14, wherein both connection portions (2', 2") are manufactured separately and connected to said tubular portion (2a).

16. The filtering pulley according to one of the preceding claims, wherein said support means (4) comprise a pair of rolling bearings.

17. The filtering pulley according to claim 16, when it depends on one of the claims from 9 to 11, wherein said support means (4) are arranged symmetrically relative to a middle line of said spokes (31).

18. The filtering pulley according to claim 16 or 17, wherein said support means (4) are arranged symmetrically relative to a middle line of said profile (6).

19. The filtering pulley according to one of the preceding claims and comprising fluid-level sealing means (35), which are configured to be operatively interposed between said actuator means (13) and said housing (9) and/or between said actuator means (13) and said hub (2).

20. The filtering pulley according to claim 19, wherein said sealing means (35) comprise a gasket (36), which is radially interposed between said actuator means (13) and said housing (9).

21. The filtering pulley according to claim 19 or 20, wherein said sealing means (35) comprise a gasket (37), which is arranged between said tubular portion (2a) of said hub (2) and said actuator means (13), and axial thrust means (38), which exert an axial force between said actuator means (13) and said gasket (37).

22. The filtering pulley according to one of the preceding claims, wherein said crown (3) defines a pair of profiles (6', 6"), which are radially staggered relative to one another.

23. The filtering pulley according to one of the preceding claims, wherein said crown (3) comprises a radial projection (53) extending from said radial inner surface (5a) and configured to cooperate in axial contact with said housing (9).

24. The filtering pulley according to one of the preceding claims, wherein said crown (3) has a "H"-shaped section comprising an annular inner portion (55), which defines said radial inner surface (5a), and a radial outer portion (56), which defines said radial outer surface (5b), as well as a connection portion (57) between said radial outer portion and said radial inner portion (55).

## Patentansprüche

1. Riemenscheibe mit Filterfunktion (1), umfassend eine Nabe (2), die dazu ausgelegt ist, an einer sich um eine Achse (A) drehenden Welle befestigt zu werden, und einen Kranz (3), der koaxial zur Nabe (2) ist,
wobei die Nabe (2) einen rohrförmigen Abschnitt (2a) und mindestens einen Verbindungsabschnitt (2', 2") definiert, der dazu eingerichtet ist, die Nabe (2) mit der drehenden Welle zu verbinden,
wobei der Kranz (3) eine radiale Außenfläche (5b) definiert, die mindestens ein Profil (6) definiert, das zur Zusammenarbeit mit einem mechanischen Übertragungselement eingerichtet ist, und eine radiale Innenfläche (5a), die radial innerhalb der radialen Außenfläche (5b) angeordnet ist,
wobei die Riemenscheibe mit Filterfunktion (1) eine Filterbaugruppe (8) umfasst, die betriebswirksam zwischen der Nabe (2) und dem Kranz (3) zwischengeschaltet ist, wobei die Filterbaugruppe (8) ein Gehäuse (9) umfasst, das mit dem Kranz (3) integral ausgebildet ist und einen Raum (11) definiert, wobei das Gehäuse (9) mittels Stützmittel (4) drehbar frei von der Nabe (2) getragen wird,
wobei die Filterbaugruppe (8) ferner ein elastisches Mittel (12) umfasst, das innerhalb des Raums (11) beweglich aufgenommen ist, und ein Betätigungsmittel (13), das dazu eingerichtet ist, in Kontakt mit dem elastischen Mittel (12) zusammenzuwirken,
wobei das Betätigungsmittel (13) einstückig zusammen mit dem rohrförmigen Abschnitt (2a) der Nabe (2) hergestellt ist und wobei das Gehäuse (9) in Kontakt mit der radialen Innenfläche (5a) des Kranzes (3) zusammenwirkt, wobei das Gehäuse (9) ein napfförmiges Element (15) umfasst, das zur Zusammenarbeit mit der radialen Innenfläche (5a) eingerichtet ist, und ein Verschlusselement (19), das zur Kontaktzusammenarbeit mit dem napfförmigen Element (15) eingerichtet ist, um den Raum (11) zu definieren, und
**dadurch gekennzeichnet, dass** das napfförmige Element (15) und das Verschlusselement (19) so ausgebildet sind, dass sie eine axiale Öffnung (23) definieren, durch die das Betätigungsmittel (13) teilweise innerhalb des Raums (11) aufgenommen ist.

2. Riemenscheibe mit Filterfunktion nach Anspruch 1, wobei mindestens eines des napfförmigen Elements (15) und des Verschlusselements (19) ein Paar axialer Vorsprünge (25) definiert, wobei die Vorsprünge (25) den Raum (11) in zwei Abschnitte (11a, 11b) unterteilen, in denen sich das elastische Mittel (12) infolge der Wirkung des Betätigungsmittels (13) bewegen kann.

3. Riemenscheibe mit Filterfunktion nach Anspruch 1 oder 2, wobei das Verschlusselement (19) radial innerhalb des napfförmigen Elements (15) angeordnet ist.

4. Riemenscheibe mit Filterfunktion nach einem der Ansprüche 1 bis 4, wobei das elastische Mittel (12) eine elastische Baugruppe (27) umfasst, wobei die elastische Baugruppe mindestens eine Schraubenfeder (50) umfasst.

5. Riemenscheibe mit Filterfunktion nach Anspruch 4, wobei die elastische Baugruppe (27) eine erste und eine zweite Schraubenfeder (50, 51) umfasst.

6. Riemenscheibe mit Filterfunktion nach Anspruch 4 oder 5, wobei die elastische Baugruppe (27) mindestens ein federtragendes Element (40) umfasst, das dazu eingerichtet ist, einen axialen Abschnitt der mindestens einen Feder (50) zumindest teilweise aufzunehmen und das Gleiten der mindestens einen Feder (50) in dem Raum zu führen.

7. Riemenscheibe mit Filterfunktion nach Anspruch 6, wobei die elastische Baugruppe (27) ein Paar federtragender Elemente (40) umfasst, die an jeweiligen Enden der mindestens einen Feder (50) angeordnet sind und mit einem Paar Seitenwänden (41) versehen sind, die dazu eingerichtet sind, einen axialen Abschnitt der mindestens einen Feder (50) zu umgeben, und mit einem Kopf (42), der mit der Seitenwand (41) verbunden ist, wobei der Kopf (42) in Kontakt mit dem Betätigungsmittel (13) zusammenwirkt.

8. Riemenscheibe mit Filterfunktion nach Anspruch 6 oder 7, wobei die elastische Baugruppe (27) einen mittleren Federträger (43) umfasst, der zwischen den Enden der mindestens einen Feder (50) zwischengeschaltet ist, wobei der Federträger (43) ein Paar Seitenwände (44) umfasst, die dazu eingerichtet sind, einen axialen Abschnitt der mindestens einen Feder (50) zu umgeben.

9. Riemenscheibe mit Filterfunktion nach einem der Ansprüche 4 bis 8, wobei das Betätigungsmittel (13) eine Scheibe (30) umfasst, die mit einer Mehrzahl von Speichen (31) versehen ist, wobei die Speichen einen radialen Innenabschnitt (31a) außerhalb des Raums (11), einen radialen Innenabschnitt (31c), der intern in dem Raum (11) aufgenommen ist und in Kontakt mit der elastischen Baugruppe (27) zusammenwirkt, und einen axialen Abschnitt (31b) umfassen, der die radialen Innen- und Außenabschnitte (31a, 31c) verbindet.

10. Riemenscheibe mit Filterfunktion nach Anspruch 9, wobei jede Speiche (31) eine Durchgangsöffnung (46) definiert, die an einem radialen Ende jeder Speiche (31) angeordnet ist.

11. Riemenscheibe mit Filterfunktion nach Anspruch 9 oder 10, wobei jede Speiche (31) Anschlagelemente (47) umfasst, die dazu eingerichtet sind, in Kontakt mit der elastischen Baugruppe (27) zusammenzuwirken, wobei die Anschlagelemente (47) aus einem Polymermaterial bestehen und mit der Speiche (31) integral sind.

12. Riemenscheibe mit Filterfunktion nach einem der Ansprüche 6 bis 10, sofern sie von Anspruch 4 abhängen, wobei zwischen den Vorsprüngen (25) und der elastischen Baugruppe (27) ein Winkelfreiraum (α) vorhanden ist.

13. Riemenscheibe mit Filterfunktion nach einem der Ansprüche 11 bis 13, sofern sie von Anspruch 4 abhängen, wobei zwischen jeder Speiche (31) und der elastischen Baugruppe (27) ein Winkelfreiraum (β) vorhanden ist.

14. Riemenscheibe mit Filterfunktion nach einem der vorangehenden Ansprüche, wobei mindestens einer der Verbindungsabschnitte (2', 2") der Nabe (2) einstückig zusammen mit dem rohrförmigen Abschnitt (2a) hergestellt ist.

15. Riemenscheibe mit Filterfunktion nach einem der Ansprüche 1 bis 14, wobei beide Verbindungsabschnitte (2', 2") separat hergestellt und mit dem rohrförmigen Abschnitt (2a) verbunden sind.

16. Riemenscheibe mit Filterfunktion nach einem der vorangehenden Ansprüche, wobei das Stützmittel (4) ein Paar Wälzlager umfasst.

17. Riemenscheibe mit Filterfunktion nach Anspruch 16, sofern er von einem der Ansprüche 9 bis 11 abhängt, wobei das Stützmittel (4) symmetrisch bezüglich einer Mittellinie der Speichen (31) angeordnet ist.

18. Riemenscheibe mit Filterfunktion nach Anspruch 16 oder 17, wobei das Stützmittel (4) symmetrisch bezüglich einer Mittellinie des Profils (6) angeordnet ist.

19. Riemenscheibe mit Filterfunktion nach einem der vorangehenden Ansprüche und umfassend fluiddichte Dichtmittel (35), die dazu eingerichtet sind, betriebswirksam zwischen dem Betätigungsmittel (13) und dem Gehäuse (9) und/oder zwischen dem Betätigungsmittel (13) und der Nabe (2) zwischengeschaltet zu werden.

20. Riemenscheibe mit Filterfunktion nach Anspruch 19, wobei die Dichtmittel (35) eine Dichtung (36) umfassen, die radial zwischen dem Betätigungsmittel (13) und dem Gehäuse (9) zwischengeschaltet ist.

21. Riemenscheibe mit Filterfunktion nach Anspruch 19 oder 20, wobei die Dichtmittel (35) eine Dichtung (37) umfassen, die zwischen dem rohrförmigen Abschnitt (2a) der Nabe (2) und dem Betätigungsmittel (13) angeordnet ist, und axiale Druckmittel (38), die eine axiale Kraft zwischen dem Betätigungsmittel (13) und der Dichtung (37) ausüben.

22. Riemenscheibe mit Filterfunktion nach einem der vorangehenden Ansprüche, wobei der Kranz (3) ein Paar Profile (6', 6") definiert, die radial zueinander versetzt sind.

23. Riemenscheibe mit Filterfunktion nach einem der vorangehenden Ansprüche, wobei der Kranz (3) einen radialen Vorsprung (53) umfasst, der sich von der radialen Innenfläche (5a) erstreckt und dazu eingerichtet ist, in axialem Kontakt mit dem Gehäuse (9) zusammenzuwirken.

24. Riemenscheibe mit Filterfunktion nach einem der vorangehenden Ansprüche, wobei der Kranz (3) einen H-förmigen Querschnitt aufweist, der einen ringförmigen Innenabschnitt (55), der die radiale Innenfläche (5a) definiert, und einen radialen Außenabschnitt (56), der die radiale Außenfläche (5b) definiert, sowie einen Verbindungsabschnitt (57) zwischen dem radialen Außenabschnitt und dem radialen Innenabschnitt (55) umfasst.

## Revendications

1. Poulie filtrante (1) comprenant un moyeu (2) qui est conçu pour être fixé à un arbre rotatif tournant autour d'un axe (A), et une couronne (3) qui est coaxiale avec ledit moyeu (2),
ledit moyeu (2) définissant une partie tubulaire (2a) et au moins une partie de connexion (2', 2"), qui est configurée pour connecter ledit moyeu (2) audit arbre rotatif,
ladite couronne (3) définissant une surface externe radiale (5b) définissant au moins un profil (6), qui est configuré pour coopérer avec un élément de transmission mécanique, et une surface interne radiale (5a), qui est radialement agencée sur l'intérieur par rapport à ladite surface externe radiale (5b),
ladite poulie filtrante (1) comprenant un ensemble filtrant (8) interposé de manière fonctionnelle entre ledit moyeu (2) et ladite couronne (3), ledit ensemble filtrant (8) comprend un boîtier (9) solidaire de ladite couronne (3) et définissant un espace (11), ledit boîtier (9) étant porté en rotation libre par ledit moyeu (2) à l'aide de moyens de support (4),
ledit ensemble filtrant (8) comprenant en outre des moyens élastiques (12), qui sont logés à l'intérieur dudit espace (11) de manière mobile, et des moyens actionneurs (13), qui sont configurés pour coopérer en contact avec lesdits moyens élastiques (12),
lesdits moyens actionneurs (13) étant fabriqués en une seule pièce avec ladite partie tubulaire (2a) dudit moyeu (2) et ledit boîtier (9) coopérant en contact avec ladite surface interne radiale (5a) de ladite couronne (3), dans laquelle ledit boîtier (9) comprend un élément cupuliforme (15), qui est configuré pour coopérer avec ladite surface interne radiale (5a), et un élément de fermeture (19), qui est configuré pour coopérer en contact avec ledit élément cupuliforme (15) afin de définir ledit espace (11), et **caractérisé en ce que** ledit élément cupuliforme (15) et ledit élément de fermeture (19) sont formés de manière à définir une ouverture axiale (23) à travers laquelle lesdits moyens actionneurs (13) sont partiellement logés à l'intérieur dudit espace (11).

2. Poulie filtrante selon la revendication 1, dans laquelle au moins l'un dudit élément cupuliforme (15) et dudit élément de fermeture (19) définit une paire de saillies (25) axiales, lesdites saillies (15) divisant ledit espace (11) en deux parties (11a, 11b) où lesdits moyens élastiques (12) peuvent se déplacer du fait de l'action desdits moyens actionneurs (13).

3. Poulie filtrante selon la revendication 1 ou 2, dans laquelle ledit élément de fermeture (19) est compris radialement à l'intérieur dudit élément cupuliforme (15).

4. Poulie filtrante selon l'une des revendications 1 à 4, dans laquelle lesdits moyens élastiques (12) comprennent un ensemble élastique (27), ledit ensemble élastique comprenant au moins un ressort hélicoïdal (50).

5. Poulie filtrante selon la revendication 4, dans laquelle ledit ensemble élastique (27) comprend un premier et un deuxième ressort hélicoïdal (50, 51).

6. Poulie filtrante selon la revendication 4 ou 5, dans laquelle ledit ensemble élastique (27) comprend au moins un élément porteur de ressort (40), qui est configuré pour loger au moins partiellement une partie axiale dudit au moins un ressort (50) et guider le coulissement dudit au moins un ressort (50) dans ledit espace.

7. Poulie filtrante selon la revendication 6, dans laquelle ledit ensemble élastique (27) comprend une paire d'éléments porteurs de ressort (40), qui sont agencés aux extrémités respectives dudit au moins un ressort (50) et sont pourvus d'une paire de parois latérales (41), qui sont configurées pour entourer une partie axiale dudit au moins un ressort (50), et d'une tête (42), qui est connectée à ladite paroi latérale (41), ladite tête (42) coopérant en contact avec lesdits moyens actionneurs (13).

8. Poulie filtrante selon la revendication 6 ou 7, dans laquelle ledit ensemble élastique (27) comprend un support de ressort intermédiaire (43), qui se situe entre les extrémités dudit au moins un ressort (50), ledit support de ressort (43) comprenant une paire de parois latérales (44), qui sont configurées pour entourer une partie axiale dudit au moins un ressort (50).

9. Poulie filtrante selon l'une quelconque des revendications 4 à 8, dans laquelle lesdits moyens actionneurs (13) comprennent un disque (30) pourvu d'une pluralité de rayons (31), lesdits rayons comprenant une partie interne radiale (31a) sur l'extérieur par rapport audit espace (11), une partie interne radiale (31c), qui est logée intérieurement dans ledit espace (11) et coopère en contact avec ledit ensemble élastique (27), et une partie axiale (31b), qui relie lesdites parties interne et externe radiales (31a, 31c).

10. Poulie filtrante selon la revendication 9, dans laquelle chaque rayon (31) définit une ouverture traversante (46) agencée à une extrémité radiale de chaque rayon (31).

11. Poulie filtrante selon la revendication 9 ou 10, dans laquelle chaque rayon (31) comprend des éléments d'impact (47) qui sont configurés pour coopérer en contact avec ledit ensemble élastique (27), lesdits éléments d'impact (47) étant en matériau polymère et étant intégrés audit rayon (31).

12. Poulie filtrante selon l'une des revendications 6 à 10, lorsqu'elles dépendent de la revendication 4, dans laquelle il existe un jeu angulaire (α) entre lesdites saillies (25) et ledit ensemble élastique (27).

13. Poulie filtrante selon l'une des revendications 11 à 13, lorsqu'elles dépendent de la revendication 4, dans laquelle il existe un jeu angulaire (β) entre chaque rayon (31) et ledit ensemble élastique (27).

14. Poulie filtrante selon l'une des revendications précédentes, dans laquelle au moins une desdites parties de connexion (2', 2") dudit moyeu (2) est fabriquée en une seule pièce conjointement avec ladite partie tubulaire (2a).

15. Poulie filtrante selon l'une des revendications 1 à 14, dans laquelle les deux parties de connexion (2', 2") sont fabriquées séparément et connectées à ladite partie tubulaire (2a).

16. Poulie filtrante selon l'une des revendications précédentes, dans laquelle lesdits moyens de support (4) comprennent une paire de roulements.

17. Poulie filtrante selon la revendication 16, lorsqu'elle dépend de l'une des revendications 9 à 11, dans laquelle lesdits moyens de support (4) sont agencés symétriquement par rapport à une ligne médiane desdits rayons (31).

18. Poulie filtrante selon la revendication 16 ou 17, dans laquelle lesdits moyens de support (4) sont agencés symétriquement par rapport à une ligne médiane dudit profil (6) .

19. Poulie filtrante selon l'une des revendications précédentes et comprenant des moyens d'étanchéité (35) de niveau de fluide, qui sont configurés pour être interposés de manière fonctionnelle entre lesdits moyens actionneurs (13) et ledit boîtier (9) et/ou entre lesdits moyens actionneurs (13) et ledit moyeu (2).

20. Poulie filtrante selon la revendication 19, dans laquelle lesdits moyens d'étanchéité (35) comprennent un joint (36), qui est interposé radialement entre lesdits moyens actionneurs (13) et ledit boîtier (9).

21. Poulie filtrante selon la revendication 19 ou 20, dans laquelle lesdits moyens d'étanchéité (35) comprennent un joint (37), qui est agencé entre ladite partie tubulaire (2a) dudit moyeu (2) et lesdits moyens actionneurs (13), et des moyens de poussée axiale (38), qui exercent une force axiale entre lesdits moyens actionneurs (13) et ledit joint (37).

22. Poulie filtrante selon l'une des revendications précédentes, dans laquelle ladite couronne (3) définit une paire de profilés (6', 6") qui sont décalés radialement l'un par rapport à l'autre.

23. Poulie filtrante selon l'une des revendications précédentes, dans laquelle ladite couronne (3) comprend une saillie radiale (53) s'étendant à partir de ladite surface interne radiale (5a) et configurée pour coopérer en contact axial avec ledit boîtier (9).

24. Poulie filtrante selon l'une des revendications précédentes, dans laquelle ladite couronne (3) présente une section en forme de « H » comprenant une partie interne annulaire (55), qui définit ladite surface interne radiale (5a), et une partie externe radiale (56), qui définit ladite surface externe radiale (5b), ainsi qu'une partie de connexion (57) entre ladite partie externe radiale et ladite partie interne radiale (55).
